Europäisches Patentamt

European Patent Office

Office européen des brevets

(19)

(11) **EP 1 544 173 A1**

(12) **EUROPEAN PATENT APPLICATION**

(43) Date of publication:
**22.06.2005 Bulletin 2005/25**

(51) Int Cl.$^7$: **C03B 37/012**, C03B 37/018,
C03B 37/027

(21) Application number: **03028425.1**

(22) Date of filing: **11.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **FITEL USA CORPORATION (a Delaware Corporation)**
**Norcross, Georgia 30071 (US)**

(72) Inventors:
• **Fleming, James W.**
  **Westfield NJ 07090 (US)**
• **Vemury, Srinivas**
  **Edmond, Oklahoma 73003 (US)**

(74) Representative: **Schoppe, Fritz, Dipl.-Ing.**
**Patentanwälte**
**Schoppe, Zimmermann, Stöckeler & Zinkler**
**Postfach 246**
**82043 Pullach bei München (DE)**

(54) **Glass preform for an optical fibre and method and apparatus for its manufacture**

(57)     An apparatus and method for fabricating an optical fiber from a glass optical fiber preform. In particular, the process of fabricating an optical fiber preform involves, during a modified chemical vapor deposition process (MCVD), collapsing the substrate tube with internally deposited layers into an optical fiber preform, and compressing the collapsed, solid optical fiber preform in the longitudinal direction. An optical fiber preform that is shorter, but larger in diameter is thus formed. The optical fiber preforms therefore can be stacked during the optical fiber fabrication process, which is useful in drawing longer optical fibers from MCVD-produced preforms with comparable outer diameter and core diameter to that used as the industry standard (125μm, 8μm).

Fig. 1

**Description**

**FIELD OF THE INVENTION**

The present invention is generally related to optical fibers and methods of fabrication and, more particularly, is related to an optical fiber preforms and methods of fabricating optical fiber preforms.

**DESCRIPTION OF THE RELATED ART**

Optical fiber is produced from a glass preform. As discussed in F. DiMarcello *et al.* "Fiber Drawing and Strength Properties," Optical Fiber Communications, Vol. I, Academic Press, Inc., 1995, at 179-248, the preform is generally arranged vertically in a draw tower such that a portion of the preform is lowered into a furnace region. The portion of the preform placed into the furnace region begins to soften, and the lower end of the preform forms what is known as the "neck-down region," where glass flows from the original cross-sectional area of the preform to the desired cross-sectional area of the fiber. From the lower tip of this neck-down region, the optical fiber is drawn.

The optical fiber typically contains a high-purity silica glass core optionally doped with a refractive index-raising element such as germanium, an inner cladding of high-purity silica glass optionally doped with a refractive index-lowering element such as fluorine, and an outer cladding of undoped silica glass. In some manufacturing processes, the preforms for making such fiber are fabricated by forming an overcladding tube for the outer cladding, and separately forming a core rod containing the core material and inner cladding material. The core rod is then inserted into the overcladding tube. Overcladding tubes are capable of being formed by a sol-gel process, as discussed, for example, in co-assigned U. S. Patent No. 5,240,488, the disclosure of which is incorporated herein by reference, or by drawing the tubes from a silica billet. Such overcladding tubes are available commercially.

The core rods are fabricated by any of a variety of vapor deposition methods known to those skilled in the art, including vapor axial deposition (VAD), outside vapor deposition (OVD), and inside vapor deposition (IVD), or modified chemical vapor deposition (MCVD). MCVD, for example, involves passing a high-purity gas, *e.g.*, a mixture of gases containing silicon and germanium, through the interior of a silica tube (known as the substrate tube) while heating the outside of the tube with a traversing heat source, commonly an oxy-hydrogen torch. In the heated area of the tube, a gas phase reaction occurs that deposits particles on the tube wall. This deposit, which forms ahead of the torch, is sintered as the torch passes over it. The process is repeated in successive passes until the requisite quantity of silica and/or germanium-doped silica is deposited.

Once deposition is complete, the body is heated to collapse the substrate tube and obtain a consolidated rod in which the substrate tube constitutes the outer portion of the inner cladding material. To obtain a finished preform, the overcladding tube typically is placed over and closely surrounds the core rod, and the components are heated and collapsed into a solid, consolidated preform, as discussed in co-assigned U.S. Patent No. 4,775,401, the disclosure of which is incorporated herein by reference.

While the optical fiber product made from a preform fabricated using MCVD is already economically viable, further cost reduction is sought. A promising avenue is increasing preform throughput. A number of parameters contribute to preform throughput, and design advances have resulted in shortened collapse time, in more rapid retraversal, etc. The parameter which has received the most attention is that of reaction and deposition rate.

When MCVD was first introduced, it was clearly deposition-rate limited. Reactant flow under operating conditions resulted in large volumes of particulate matter injected, but in relatively small capture. Under most conditions more reaction product was exhausted than deposited. Studies directed to increased deposition at first identified a mechanism and then yielded increased deposition rates. In accordance with the mechanism, "thermophoresis," particles follow a temperature gradient in the direction of the relatively cool substrate tube wall. See 50 *Journal of App. Phys.,* 5676 (1979). U.S. Patent No. 4,263,032 describes process variables enhancing deposition through thermophoretic means. An embodiment depends on an enhanced thermophoretic drive field produced by water-cooling the tube downstream of the hot zone. See U.S. Patent No. 4,302,230, incorporated herein by reference.

An approach to increased reaction rate in MCVD processing is described in U S Patent No. 4,262,035. In this MCVD species, an r.f plasma heat source yields a luminous "fire-ball" with temperatures of thousands of degrees centigrade. High reaction rates are permitted, and increased deposition efficiency is ascribed to steep temperature gradients. Unlike flame MCVD, conditions have permitted high reaction rates while avoiding visible particulate matter in the exhaust A process described as using a microwave plasma in an evacuated chamber is in use in Europe for making fiber preforms. Rates are limited in this plasma Chemical Vapor Deposition process by low reactant introduction rate corresponding with evacuation (Kuppers *et al.,* Technical Digest International Conference Integrated Optics, Optical Fiber Communication--Tokyo, Japan, page 319, 1977).

One particular limitation on deposition rate during the MCVD process is the layer of material that has already been deposited. In particular, once the layer of deposited material has reached a certain thickness, when the heat source passes over a substrate tube, the heat from the heat source is no longer able to reach the inside of the substrate tube where the undeposited materials reside. Also, the collapse of the substrate tube into an optical fiber preform takes very long time, making the process prohibitively expensive. Increasing the diameter of the substrate tube wall does not solve this problem, because the limitation is due to the thickness of the deposited layer that is built on the inside of the substrate tube wall. Further, increasing the heat from the heat source will cause various other problems, such as melting of the substrate tube wall.

Further, in present practice, it is common that the MCVD process produces preforms capable of yielding 600 kilometers of fiber, while, obviously, greater fiber lengths are to be desired.

Thus, a heretofore unaddressed need exists in the industry to address the aforementioned and/or other deficiencies and inadequacies.

## SUMMARY OF THE INVENTION

The present invention provides an apparatus and method for fabricating an optical fiber from an optical fiber preform fabricated preferably using modified chemical vapor deposition (MCVD) but adaptable to other preform fabricating arrangements also. Briefly described, the optical fiber produced by the method of one embodiment of the invention, among others, includes an optical fiber that is from approximately 1200 kilometer to approximately 3000 kilometers in length. The optical fiber preferably will have a standard outer diameter of approximately 125 microns. Further, in one embodiment, the optical fiber may have a core with a diameter of approximately 8 microns. These measurements conform to industry standards, except for the greatly increased yield of produced fiber length resulting from the present invention.

Briefly described, one such exemplary method of fabricating an optical fiber core rod, among others, can be broadly summarized by the following steps of the invention: providing a glass substrate tube with a longitudinal axis; depositing chemicals within the glass substrate tube via, for example, a modified chemical vapor deposition (MCVD) process, collapsing the substrate tube into an optical fiber preform and increasing the diameter of the preform by compressing the collapsed preform longitudinally. The method may further include insertion of the core rod into an overcladding tube and collapse of the overcladding tube onto the rod to form an optical fiber preform. Increasing the diameter yields shorter preforms which may be stacked within an overclad tube to yield a much longer preform. When the rods are stacked, preforms of the present invention are capable of producing from approximately 1200 to approximately 3000 kilometers of continuous optical fiber, as opposed to prior art lengths of 600 kilometers.

The present invention has numerous advantages, a few of which are delineated hereafter as mere examples. An optical fiber preform of the present invention is larger than traditional optical fibers preforms as a result of the applied compression, while still maintaining the correct ratio of core to cladding. Thus, during drawing of the optical fiber, the drawing mechanism does not need to be stopped and re-loaded with optical fiber preforms, allowing for faster and more efficient production of optical fibers. Additionally, optical fibers of the present invention, though longer in longitudinal length, have an outer diameter and core diameter that are in standard use in the industry. By compressing the optical fiber preform during the fabrication of the optical fiber core rod, size limitations of the MCVD process are overcome.

Other advantages of the invention are that it is simple in design, as robust and reliable during use as shorter optical fibers, and easily implemented for mass commercial production. Further, optical fiber production facilities already equipped with MCVD processing equipment do not have to be re-designed or re-constructed in order to manufacture optical fibers longer in length. Clearly, some embodiments of the invention may exhibit advantages in addition to or lieu of, those mentioned above. Additionally, other systems, methods, features, and advantages of the present invention will be or become apparent to one with skill in the art upon examination of the following drawings and detailed description. It is intended that all such additional systems, methods, features, and advantages be included within this description, be within the scope of the present invention, and be protected by the accompanying claims.

## BRIEF DESCRIPTION OF THE DRAWINGS

Many aspects of the invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.

FIG. 1 is an elevation view of an embodiment of an apparatus capable of performing the method of the invention, indicating compression of an optical fiber preform.

FIG. 2 is a graph of the index profile of an optical fiber preform formed using a conventional MCVD process, before the compression.

FIG. 3 is a graph of the index profile of an optical fiber preform formed after the compression process.

## DETAILED DESCRIPTION

As will be described in greater detail herein, the apparatus and methods of the present invention potentially enable longer optical fibers to be fabricated, particularly optical fibers of an outer and core diameter that is standard in the industry. In particular the apparatus and methods of the present invention include larger preforms that enable a more continuous fiber drawing operation that saves in cost and efficiency in the fiber-making process. Based on these principles, reference will now be made to the drawings.

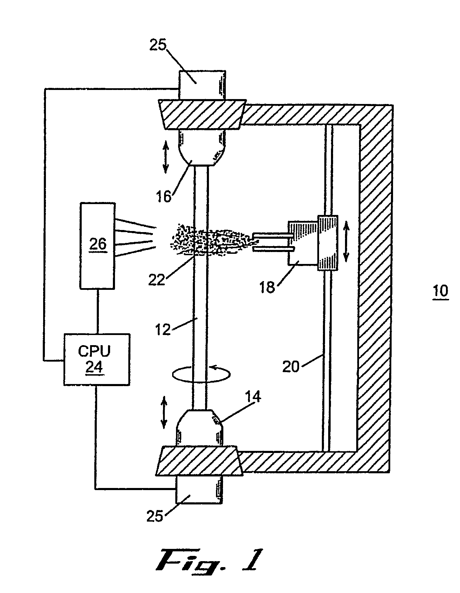

FIG. 1 illustrates an apparatus 10 suitable for practicing an embodiment of the invention. The optical fiber preform 12 is held by two chucks 14, 16, at least one of which is moveable longitudinally. Preferably, the optical fiber preform 12 may be made of glass. The chucks 14, 16 are capable of rotating the optical fiber preform 12, and at least one of the chucks, optionally both, is capable of providing compressive movement along the direction of the longitudinal axis of the optical fiber preform 12. A heat source 18 is provided, the heat source 18 capable of traversing the length of the optical fiber preform 12, *e.g.,* along a guide 20, such that discrete heated portions 22 of the tube 12 are provided. The heat source traverse discussed herein is not intended to indicate that the heat source 18 itself must move along the tube 12, but indicates any technique by which the heat source 18 moves relative to the tube 12, including movement of the heat source 18, of the tube 12, or of both the source 18 and the tube 12.

The optical fiber preform 12 can be made by any suitable technique known to those skilled in the art, *e g.,* outside vapor deposition (OVD), vapor axial deposition (VAD), inside chemical vapor deposition (ICVD), or modified chemical vapor deposition (MCVD). The optical fiber preform 12 is generally silica-based, but other materials suitable for making optical fiber are also possible. It is similarly possible for the optical fiber preform 12 to have any desired dopant/refractive index profile.

The heat source 18 is any source capable of initiating and sustaining deposition of materials during the desired compression process during deposition. Typically; the source is an isothermal plasma torch, *e. g.,* as described in co-assigned U.S. Patent No. 5,861,047. Plasma is comprised of oxygen, *e.g.,* pure oxygen, or oxygen and an inert gas such as argon. For the purposes of this document, the term "heat source" is used interchangeably with the term "torch." Other heat sources 18 include, but are not limited to, a furnace, a flame, and a laser.

The original core profile of the core rod to be formed after the deposition process is optionally determined prior to heating, as a function of position along the rod length. The profile is generally determined by measuring the refractive index profile, *e.g.,* by use of a PK Technology preform profiler. The diameter is generally measured at a sufficient number of points to reasonably reflect the overall profile, with the particular number of points depending on the particular application and the desired accuracy of the treatment. This core profile information may be directly input into a computer 24. Based on the profile, it is possible to determine what adjustments are necessary in the core diameter profile, and more importantly, where those adjustments are necessary, in order to attain a desired profile. These adjustments are typically able to be calculated and/or input in the same computer.

Once the core profile is determined, the heat treatment is initiated. During the traverse, the source 18 heats localized regions 22 of the preform 12, which typically ranges from about 1500 to about 2700°C. Typically, these localized regions constitute about 2 to about 10 mm (measured along the longitudinal axis) of the preform 12, depending on the heat source type and the apparatus configuration.

While these regions 22 are in a heated state, it is possible to adjust the diameter of the region 22 via a CPU 24 and monitor 26, along with any connections and leads, which together comprise a control system that monitors and controls the amount of pressure applied by chucks 14, 16, to the preform 12 by applying a compressive movement. Specifically, a compressive movement will increase the core and preform diameter and, by increasing the volume (through viscous flow) within a particular length of the preform 12, an overall larger preform 12, with deposited material therein, is formed. The compressive movements are performed by movement of one or both of the chucks 14, 16 relative to the other by suitable means 25 under control of signals from CPU 24.

The extent of compressive movement is generally controlled by a control system, connected to the chucks 14, 16, based on a comparison of the pre-treatment profile and size to the desired profile and size. The control system includes both a monitor 26 and a controller 24, as well as any leads or connectors therebetween. For example, FIG. 1 shows an optional controller, or central processing unit (CPU) 24, connected to a member 25 for moving chuck 14 or 16, or both. The monitor 26 is connected to a CPU 24 which is also connected to moving means 25 for chuck 16. Monitor 22 monitors the profile and/or diameter of preform 12, and sends a signal to CPU 24 with the profile and/or diameter information. The CPU 24 may then compare the profile and/or diameter information with a predetermined desired profile and/or diameter. The CPU 24 then may send signals to members 25 to move chuck 16 and/or 18 regarding amount of compression to be applied to preform 12. Optionally, monitoring and adjustment of compression can be manually performed.

As the heat source 18 traverses the preform 12, it is thus possible for continual compressive movements to be applied, to provide the desired size and/or profile. It is also possible for intermittent or no longitudinal compressive movement to be applied, *e.g.*, if the preform 12 at a particular heated region 22 is already of the desired diameter.

In a preferred embodiment, the preform 12 is arranged such that the longitudinal axis is substantially vertical. The entire length of the preform 12 is generally able to be treated by attaching handles (not shown) to the ends of the preform 12, with the handles then inserted into the chucks 14, 16. This vertical arrangement reduces or eliminates the ability of gravity to affect the softened, viscous regions of the preform 12 in a nonuniform manner. Without the vertical arrangement, gravity has the potential to make the preform 12 axially non-true and/or to cause bending of the finished preform 12. Generally, the preform 12 is rotated during the heating to improve the uniformity of the heating. For a plasma torch, a preform rotation of approximately 10 to approximately 60 rpm is typical. A typical traverse rate for a plasma torch is approximately 1 to approximately 10 cm/minute for a preform diameter of 15 to 30 mm (generally, the larger the preform diameter, the slower the traverse rate, since thicker preforms 12 require more heating). Thus, for a preferred tube size of 150 mm, the typical traverse rate is approximately 3 cm/minute.

For an embodiment of the type illustrated in FIG. 1, but in which (a) only the upper chuck 16 is capable of compressive movement, and (b) the torch 18 traverses the preform 12 at a downward velocity and the preform diameter size is adjusted, as follows. The torch is traversed along the longitudinal axis of the preform 12 at a velocity, $v_t$, and the top chuck 16 is moved (along the direction of the tube's longitudinal axis) at a velocity, $v_c$, according to:

$$v_c = v_t \left(1-(d_c/d_d)^2\right) \qquad (1)$$

where $d_c$ is the initial core diameter at a particular region prior to heating, and $d_d$ is a desired core diameter at that region. The velocity, $v_c$, is positive due to the compressive movement. For other embodiments, development of similar algorithms is within the skill of an ordinary artisan, based on the guidelines herein.

Larger core rods in turn allow fabrication of larger preforms, *e.g.*, preforms capable of providing at least 1200 km, optionally at least 2400 km, and preferably at least approximately 3000 km of silica fiber. The preforms can be stacked into the overclad tube during the optical fiber drawing process, thus taking advantage of lower break rates and higher yields obtained for double length preforms.

In a preferred embodiment, the optical fiber produced has an overall outer diameter of approximately 125 μm, and a core diameter of approximately 8 μm. A 125 μm-diameter fiber is commonly used in the industry, and thus cables, connectors, housings, and optical fiber ribbon designs are usually configured for a standard 125 μm-diameter optical fiber. The invention will be further clarified by the following example, which is intended to be exemplary.

Example

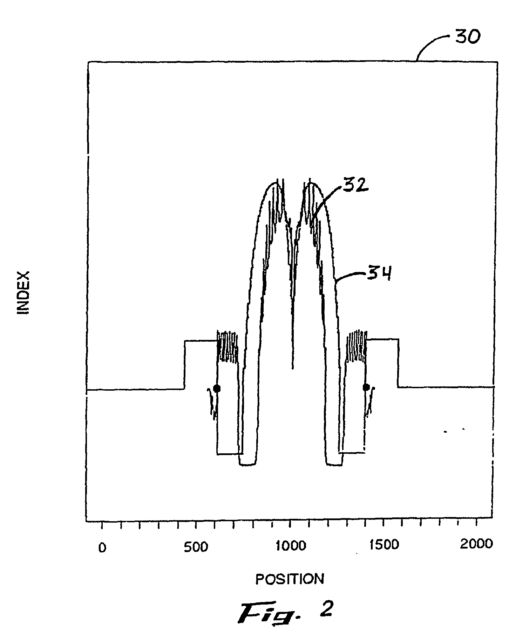

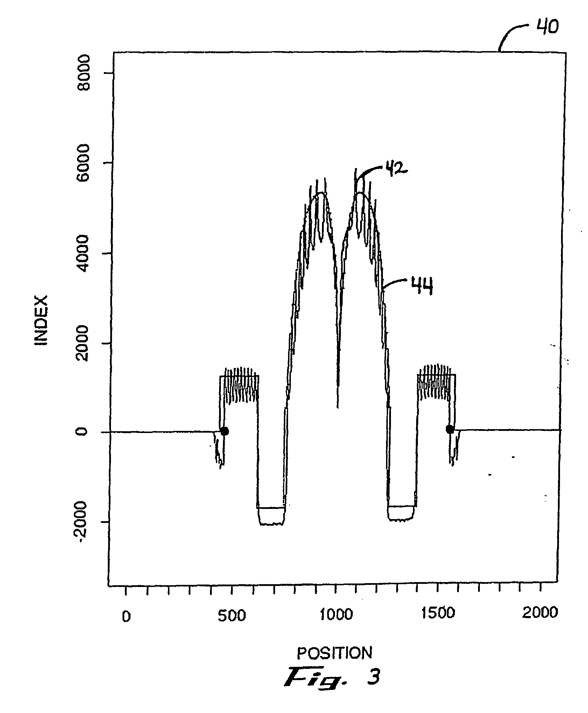

An exemplary index profile was taken of a conventional preform, formed using an MCVD process. A graph 30 of the index profile plotted versus position can be found in FIG. 2. Line 32 is the index profile of a typical preform made using the standard MCVD process. The core diameter is about 5 mm. Line 34 is the target profile which, in a preferred embodiment, is achieved by compressing the preform. In this example, the core diameter is optimally 8.33 millimeters (mm). FIG. 3 shows the profile of the compressed preform (line 42), which falls on top, or nearly on top, of the target line 44. The core diameter of the preform after compression was approximately 8.3 mm, which is very close to the target. FIG. 3 demonstrates that not only is the core diameter target achieved, but also the feature of the index profile remains intact and is even improved in the preferred method of the invention.

The uncompressed preform is approximately 90 mm in diameter before it is drawn, whereas the compressed preform is approximately 150 mm in diameter before it is sent to draw. A number of such preforms can be stacked in an overclad tube and the draw process can be continued for an extended amount of time without interrupting the process, thus increasing the productivity, and saving time and cost in the optical fiber manufacturing process, as well as increasing the length of the optical fiber that can be produced.

It should be emphasized that the above-described embodiments of the present invention are merely possible examples of implementations set forth for a clear understanding of the principles of the invention. Many variations and modifications may be made to the above-described embodiments of the invention without departing substantially from the spirit and principles of the invention. All such modifications and variations are intended to be included herein within the scope of this disclosure and the present invention and protected by the following claims.

**Claims**

1. A process for fabricating an optical fiber core rod, comprising:

   providing a glass substrate tube with a longitudinal axis;
   depositing materials within the glass substrate tube via a vapor deposition process;
   collapsing the substrate tube into an optical fiber preform;
   monitoring the diameter of the preform; and
   providing compressive movements along the longitudinal axis of the preform when a variation in desired diameter is detected.

2. The process of claim 1, wherein the vapor deposition process includes traversing a heat source along the longitudinal axis of the optical fiber preform to provide heated regions; and

wherein the compressive movements along the longitudinal axis of the optical fiber preform are provided while the heat source traverses the preform.

3. The process of claim 1, wherein the compressive movements along the longitudinal axis of the optical fiber preform induce an increase in the core diameter of the preform.

4. The process of claim 1, wherein the compressive movements along the longitudinal axis of the optical fiber preform are applied continuously while a heat source traverses the entire length of the preform.

5. The process of claim 1, wherein the fabricated preform has an outer diameter from approximately 20 millimeters to approximately 54 millimeters.

6. The process of claim 1, further comprising:

subsequent to compressing the optical fiber preform, inserting one or more of the preforms into an overcladding tube and collapsing the overcladding tube onto the preform, the cladded preform having sufficient material for producing from approximately 1200 to approximately 3000 kilometers of continuous optical fiber.

7. The method of claim 6, wherein inserting the preform into an overcladding tube further comprises stacking multiple preforms into the overcladding tube.

8. The process of claim 7, wherein the stacked optical fiber preforms are capable of producing an optical fiber with a core diameter of approximately 8 microns.

9. The process of claim 6, further comprising:

drawing an optical fiber from the one or more preforms, wherein the optical fiber is from approximately 1200 to approximately 3000 kilometers in length.

10. The process of claim 9, wherein the optical fiber produced has an outer diameter of approximately 125 microns and a core diameter of approximately 8 microns.

11. The process of claim 1, wherein the optical fiber preform has an outer diameter of approximately 150 millimeters.

12. An optical fiber preform, wherein the optical fiber preform is capable of being stacked in an overcladding tube, thereby producing an overclad preform, having sufficient material for producing approximately 2400 to approximately 3000 kilometers of optical fiber.

13. The optical fiber preforms of claim 12, wherein the stacked optical fiber preforms are capable of producing an optical fiber that has a uniform core diameter profile.

14. The optical fiber preform of claim 12, wherein the stacked optical fiber preforms are formed from a glass substrate tube using a modified chemical vapor deposition.

15. A control system comprising:

a monitor that monitors at least one of core diameter and profile of an optical fiber preform; and
a controller that compares at least one of the core diameter and profile of the preform with at least one of a predetermined core diameter and profile, and determines pressure that should be applied to the preform.

16. The control system of claim 15, wherein the controller is a central processing unit (CPU).

Fig. 1

Fig. 2

POSITION

*Fig. 3*

**European Patent Office**

**PARTIAL EUROPEAN SEARCH REPORT**

which under Rule 45 of the European Patent Convention shall be considered, for the purposes of subsequent proceedings, as the European search report

Application Number

EP 03 02 8425

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 156 018 A (LUCENT TECHNOLOGIES INC) 21 November 2001 (2001-11-21) * the whole document * ----- | 1-16 | C03B37/012 C03B37/018 C03B37/027 |
| X | PATENT ABSTRACTS OF JAPAN vol. 2000, no. 12, 3 January 2001 (2001-01-03) & JP 2000 256024 A (SHIN ETSU CHEM CO LTD), 19 September 2000 (2000-09-19) * abstract * ----- | 1-3,15, 16 | |
| X | US 2002/108403 A1 (DONG XIAOYUAN ET AL) 15 August 2002 (2002-08-15) * abstract; claim 11 * ----- | 1-3 | |
| X | EP 0 992 460 A (CIT ALCATEL) 12 April 2000 (2000-04-12) * the whole document * ----- | 12,13, 15,16 | |
| A | US 2003/200769 A1 (FAUCHE REMI ET AL) 30 October 2003 (2003-10-30) * the whole document * ----- | 1,12,15 | TECHNICAL FIELDS SEARCHED (Int.Cl.7) C03B |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 7 June 2004 | Stroud, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..................................................................................
& : member of the same patent family, corresponding document

EPO FORM 1503 03.82 (P04C07)

Claim(s) searched incompletely:
     1-16

Claim(s) not searched:
          -

Reason for the limitation of the search:

Present claims 12-14 relate to a preform product defined by reference to a desirable characteristic or property, namely the capability of the preform to be stacked & the capability of the latter to produce a long optical fiber when drawn as well as one having uniform core diameter profile. The claims cover all products having this characteristic or property, whereas the application provides support within the meaning of Article 84 EPC and disclosure within the meaning of Article 83 EPC for only a very limited number of such products. In the present case, the claims so lack support, and the application so lacks disclosure, that a meaningful search over the whole of the claimed scope is impossible. Independent of the above reasoning, the claims also lack clarity (Article 84 EPC). An attempt is made to define the product by reference to a result to be achieved. Again, this lack of clarity in the present case is such as to render a meaningful search over the whole of the claimed scope impossible.

In addition, present claims 15 and 16 relate to an extremely large number of possible systems (apparatus). Support within the meaning of Article 84 EPC and disclosure within the meaning of Article 83 EPC is to be found, however, for only a very small proportion of the apparatus claimed. In the present case, the claims so lack support, and the application so lacks disclosure, that a meaningful search over the whole of the claimed scope is impossible.

Furthermore, present claims 1-11 relate to an extremely large number of possible processes. Support within the meaning of Article 84 EPC and disclosure within the meaning of Article 83 EPC is to be found, however, for only a very small proportion of the processes claimed. In the present case, the claims so lack support, and the application so lacks disclosure, that a meaningful search over the whole of the claimed scope is impossible.

Consequently, the search has been carried out for those parts of the claims which appear to be clear, supported and disclosed, namely those parts relating to: the method of claims 1-3 combined with the additional step measuring the profile of the preform & comparing this with a desired profile, then using the heat/compression step to increase trhe diamter where a shortfall was detected; the method of claims 1 and 4 combined to produce a shorter preform of increased diameter suitable for stacking within a tube to increase the total volume of preform glass to be drawn to a fiber; a preform product of claim 12 comprsing a tube containing several preforms stacked one above each other, the latter obtainable by the process of claim 4 including the further features mentioned above; the apparatus of claim15 additionally comprising the means necessary for making it suitable for carrying out the process of claim 1, e.g. heat source, means for compression, both linked to controller output signals.

## ANNEX TO THE EUROPEAN SEARCH REPORT
## ON EUROPEAN PATENT APPLICATION NO.

EP 03 02 8425

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2004

| Patent document cited in search report | | Publication date | Patent family member(s) | | Publication date |
|---|---|---|---|---|---|
| EP 1156018 | A | 21-11-2001 | US | 6553790 B1 | 29-04-2003 |
| | | | CA | 2340840 A1 | 09-11-2001 |
| | | | CN | 1322686 A | 21-11-2001 |
| | | | DE | 60010054 D1 | 27-05-2004 |
| | | | EP | 1156018 A1 | 21-11-2001 |
| | | | JP | 2002012437 A | 15-01-2002 |
| JP 2000256024 | A | 19-09-2000 | JP | 3105206 B2 | 30-10-2000 |
| US 2002108403 | A1 | 15-08-2002 | NONE | | |
| EP 0992460 | A | 12-04-2000 | US | 6314765 B1 | 13-11-2001 |
| | | | EP | 0992460 A2 | 12-04-2000 |
| | | | US | 2002053224 A1 | 09-05-2002 |
| US 2003200769 | A1 | 30-10-2003 | FR | 2839063 A1 | 31-10-2003 |
| | | | CN | 1454859 A | 12-11-2003 |
| | | | EP | 1359127 A1 | 05-11-2003 |
| | | | JP | 2004026638 A | 29-01-2004 |

EPO FORM P0459

For more details about this annex : see Official Journal of the European Patent Office, No. 12/82